# EUROPEAN PATENT APPLICATION

(11) **EP 0 670 259 A2**
(43) Date of publication of application: **06.09.1995**
(21) Application number: 94610039.3
(22) Date of filing: 05.07.1994
(51) Int. Cl.: B62J 6/00, F21L 15/06

(54) **Battery bicycle lamp**

(30) Priority: 02.03.1994 DK 110/94
(71) Applicant: BASTA LASEFABRIK A/S, DK-4220 Korsor (DK)
(72) Inventor: Galsgaard, Christen, DK-4180 Soro (DK)
(74) Representative: Larsen, Hans Ole

(57) **Abstract**

According to the invention, by configuring the battery housing (3) and the lamp housing (8) in such a manner that the adjacent contact faces (7, 14) form an angle of 45° with the normal plane of the lamp, the parts (3, 8) can be assembled in two different positions in order to form a vertical type (fig. 1) and an horizontal type (fig. 2), respectively.

This simplifies the production due to the reduced number of parts and at the same time it implies correspondingly reduced transportation and storage costs.

## Description

The invention relates to a battery lamp, to be used preferably as a bicycle lamp and comprising a battery housing and a lamp housing mounted on the battery housing.

Bicycle lamps of this kind are known in various designs and types.

Thus one type is configured to be mounted in vertical position, in which position the light emission is effected at right angles from the lamp. This type is rather well-known. possibly because it is mounted on a holder by pressing down a receiving portion provided on the rear wall of the lamp over the holder. Furthermore, the weight of the lamp ensures that the lamp is securely attached to the holder, even during a bumpy ride.

Another type is configured for mounting in horizontal position, where the light emission is effected in continuation of the actual lamp. This lamp is more streamlined when mounted and it can be placed parallel with a horizontally extending frame member, for example the handlebars or the carrier. With regard to a secure mounting the lamp must of course be secured to the holder in such a manner that it does not become unfastened and falls off.

Consequently, the two types are produced for vertical or horizontal use. In practice this means that two types of each lamp must be produced in order to satisfy the market for both types. This has its drawbacks, as obviously this calls for production of twice the number of components and to which should be added the demand for storage and transport capacity. Furthermore, marketing is made difficult.

### Advantages of the invention

According to the invention, by configuring the parts fitted in the completed lamp, i.e. the battery housing and the lamp housing, in such a manner that their mutual contact faces form an angle of 45° with the normal plane of the lamp, a lamp is provided in a surprisingly simple manner, which lamp can be assembled to form either a vertical or a horizontal type at option, solely depending on how the parts are placed mutually in relation to each other before they are locked together. This implies a radical simplification of the production, where the parts are thus limited to comprise elements for one lamp only as well as of the demand for storage, transportation and marketing, as this will now have to correspond to only one type of lamp.

As disclosed in claim 2, by configuring the battery housing with the rear wall as the larger surface, good strength and rigidity is achieved in the lamp housing where the receiving means are provided. Thus it can be ensured that the lamp is secured to the holder in the best manner possible.

As disclosed in claim 3, by configuring the lamp housing with the lamp glass on the side abutting against the contact face, it is achieved that reflector and possible side reflectors as well as socket and bulb can be mounted in such a manner that the lamp housing corresponds to the battery housing and thus can extend in continuation of this housing.

As disclosed in claim 4, by providing the parts with concurrent locking means, the lamp can be easily assembled and disassembled in both positions.

As disclosed in claim 5, by configuring the lamp housing with a projecting edge on the front and rear edge, which projecting edge can be placed in a groove and a spring clip, respectively, a simple and stable assembly of the parts is achieved.

As disclosed in claim 6, by configuring the spring clip in continuation of the side guides on the rear wall, a stable spring power and a secure mounting of the parts are achieved due to the rigidity of the housing.

As disclosed in claim 7, by configuring the contact spring on the lamp housing in such a manner that it can make contact with the battery in both positions, a stable power supply to the bulb is achieved.

Finally, as disclosed in claim 8, it is expedient to mount the switch at the top of the lamp housing, where it can be operated in both mounting positions.

### The drawing

An example of an embodiment according to the invention will now be describved in detail with reference to the drawing, wherein
- fig. 1: shows the lamp assembled in vertical position,
- fig. 2: shows the lamp assembled in horizontal position,
- fig. 3: shows the lamp before assembly into the vertical type,
- fig. 4: shows the lamp before assembly into the horizontal type,
- fig. 5: shows the battery housing seen from the front,
- fig. 6: shows the battery housing seen from the rear,
- fig. 7: shows the lamp housing seen from the light emitting side and,
- fig. 8: shows the lamp housing seen from below.

### Description of the example embodiment

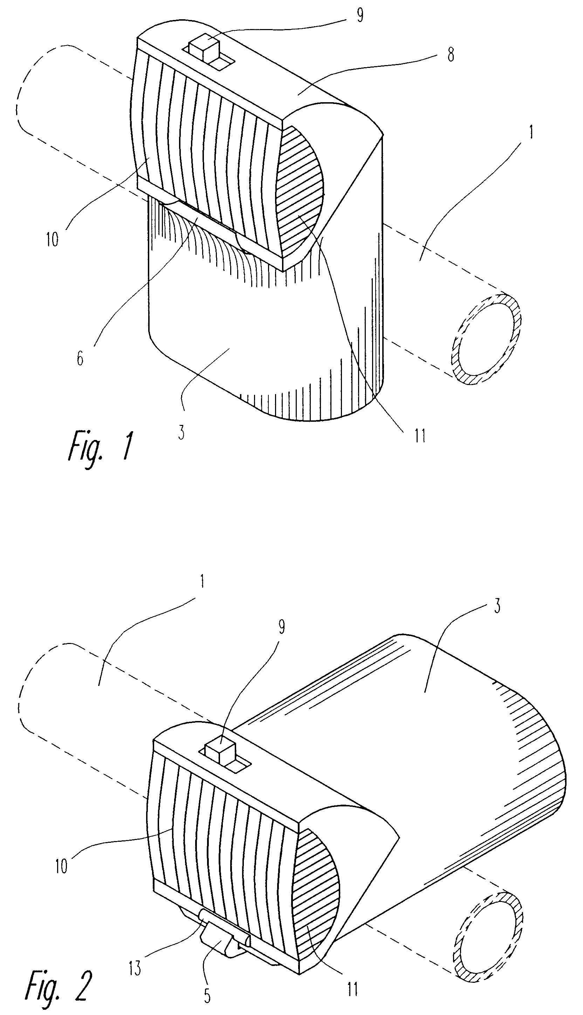

Figs. 1 and 2 show an example embodiment of the battery lamp assembled into a vertical type, fig. 1, and a horizontal type, fig. 2, respectively.

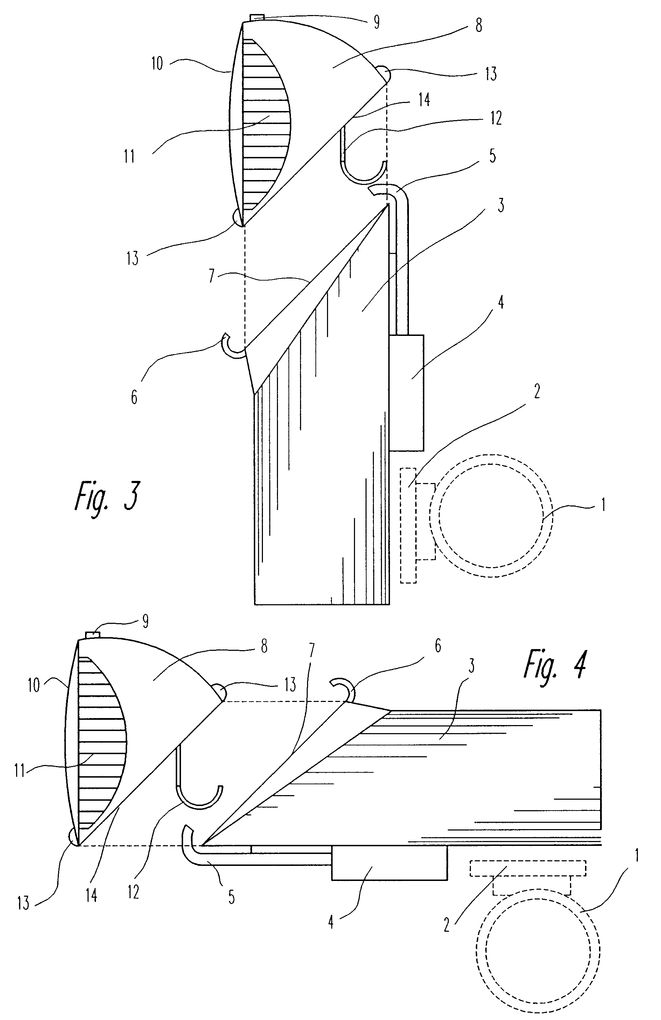

As shown in figs. 3 and 4 the lamp is constituted by two parts, i.e. a battery housing 3 and a lamp housing 8.

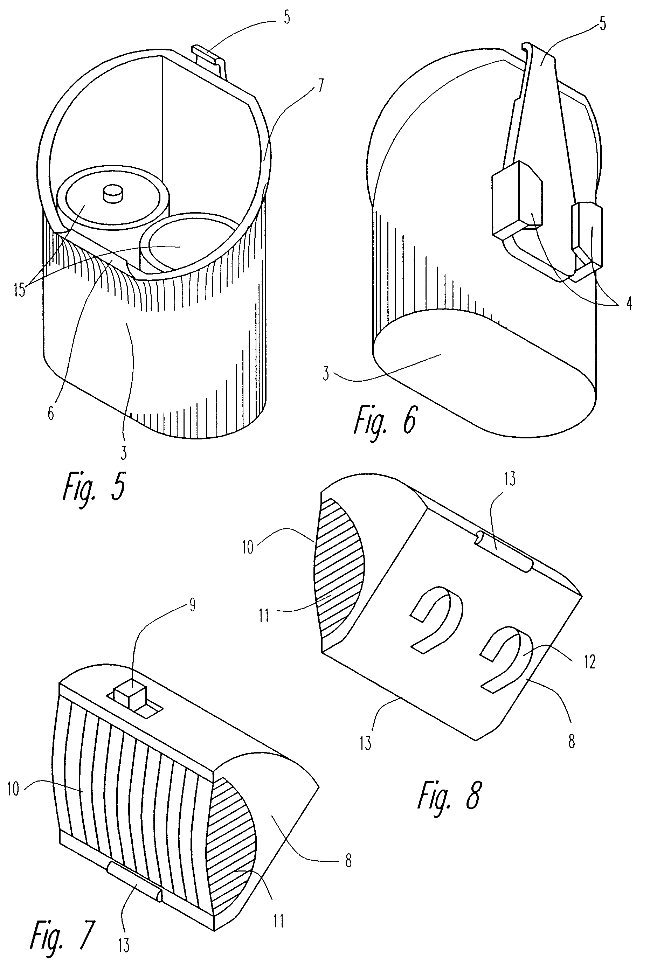

Moreover, as shown in figs. 5 and 6, the battery housing 3 comprises an oval frame with a bottom. The part is made preferably of synthetic materials and at the bottom it is provided with a busbar for series connection of two batteries 15, as indicated in fig. 5.

On the rear wall of the battery housing 3 two side guides 4 are provided to accommodate the lamp holder 2, as indicated by the dotted line in figs. 3 and 4. An elevation extends from the side guides, which elevation is ends in a spring leaf 5 disengaged from the housing. The spring leaf 5 ends in a folding to form a hook that projects over the upper edge 7 of the housing 3.

In the front part of the lamp housing 3 a groove 6 is provided which projects somewhat over the side edge of the housing.

The lamp housing is shown in figs. 7 and 8. It has a V-shaped frame 8 in which is mounted a reflector, which is not shown, and a socket with a bulb.

Moreover, contact springs 12 are mounted on the under-surface of the frame, which springs are electrically connected to the socket. The contact springs are made preferably of metal.

Moreover, a switch 9,is provided on top of the housing to disconnect the current to the bulb.

A projection edge or projection 13 is configured at the front and rear edge of the frame 8.

Finally, a lamp glass 10 is provided in front of the reflector, which lamp glass extends somewhat downwards on the side 11 so that side light can be emitted from the lamp.

Furthermore, the battery housing 3 and the lamp housing 8 are configured and dimensioned in such a manner that the contact faces 7, 14 extend at an angle of 45° with a plane at right angles to the parts, the normal plane.

Thus the optional mounting of the parts is made possible by a vertical lamp type, as shown in figs. 1 and 3 and a horizontal type, as shown in figs. 2 and 4, respectively.

The only difference between the two types is whether the lamp housing 8 is placed with the lamp glass 10 facing forwards or upwards in relation to the battery housing 3.

The locking means of the parts comprising a projecting edge 13 in the groove 6 and hook 5 of the battery housing 3 is universal and can work in both positions. The elastic hook 5 can overlap the projecting edge 13 in both positions. Furthermore, the electrical contact springs 12 touch the terminals of the battery 15 in both positions.

The parts can be disassembled when the batteries 15 must be replaced. After replacement of the batteries the parts are assembled again.

The lamp glass 10 may be transparent and provided with a lens for use as headlight, and with red glass for use as rear light. The lamp glass is made preferably of synthetic materials.

Other configurations of battery housing and lamp housing may be possible, however, the crucial point of the invention is that the mutual contact faces of the parts extend at an angle of 45° with the normal plane, whereby the same parts can be connected to produce two light emissions at right angles to each other in relation to the battery housing.

## Claims

1. Battery lamp, preferably for use as bicycle lamp and comprising a battery housing and a lamp housing mounted on the battery housing, **characterized** in that the contact faces 7, 14 of the battery housing (3) as well as the lamp housing form an angle of 45° with the normal plane of the lamp.

2. Battery lamp according to claim 1, **characterized** in that the battery housing (3) on the rear wall is provided with side guides (4) for accommodation of a lamp holder (2), and that the contact face (7) is inclined downwards towards the front wall.

3. Battery lamp according to claim 1, **characterized** in that the lamp housing (8) is provided with a lamp glass (10, 11) on the front part, and that the contact face is inclined upwards towards the rear part.

4. Battery lamp according to claims 1 - 3, **characterized** in that the battery housing (3) and the lamp housing (8) at the front edge and rear edge of the contact face (7 and 14) are provided with concurrent locking means (5, 6 and 13).

5. Battery lamp according to claim 4, **characterized** in that the locking means on the battery housing (3) are constituted by a groove (6) on the front wall and a spring hook (5) on the rear wall and on the lamp housing (8) by a projecting edge on the front and rear part, which projecting edge (13) can extend in the groove (6) and under the hook (5), respectively, optionally.

6. Battery lamp according to claim 5, **characterized** in that the spring hook (5) extends in continuation of the side guides (4) and is attached to the rear wall of the battery housing (3) with the exception of the upper portion for formation of a springy hook (5).

7. Battery lamp according to claims 1 - 6, **characterized** in that at least one contact spring (12) is mounted on the contact face (14) of the lamp housing (8), which spring can abut upon the contact points of the battery or the batteries (15) placed in the battery housing (3) in both mounting positions (figs. 1 and 2) of the lamp housing (8).

8. Battery lamp according to claims 1 - 7, **characterized** in that a switch (9) is mounted at the top of the lamp housing (8).
